# EUROPÄISCHE PATENTSCHRIFT

(11) **EP 1 124 911 B1**
(45) Veröffentlichungstag und Bekanntmachung des Hinweises auf die Patenterteilung: **06.05.2004**
(21) Anmeldenummer: 99947345.7
(22) Anmeldetag: 14.09.1999
(51) Int. Cl.: C09J 123/16

(54) **SPRÜHBARER SCHMELZKLEBSTOFF**
SPRAYABLE HOT-MELT ADHESIVE
COLLE A FUSION PULVERISABLE

(30) Priorität: 21.09.1998 DE 19843141
(43) Veröffentlichungstag der Anmeldung: 22.08.2001
(73) Patentinhaber: Henkel Kommanditgesellschaft auf Aktien, 40589 Düsseldorf (DE)
(72) Erfinder: TRÄGER, Heinrich, D-40670 Meerbusch (DE); KOLOWROT, Dirk, D-47799 Krefeld (DE)
(86) Internationale Anmeldenummer: PCT/EP1999/006799
(87) Internationale Veröffentlichungsnummer: WO 2000/017286

(56) Entgegenhaltungen:
- EP-A- 0 442 045
- WO-A-97/15636
- WO-A-97/33921
- US-A- 4 210 570
- US-A- 5 021 257
- 'Vestoplast, Klebrohstoff für Hot-melt Anwendungen', 1996, HOLS, MARL

## Beschreibung

Die Erfindung betrifft einen sprühbaren Schmelzklebstoff auf der Basis eines weitgehend amorphen Poly-α-olefins (APAO) mit einem Erweichungspunkt (Ring- und Kugel-Methode) zwischen 70 und 130 °C und einer Schmelzviskosität bei 190 °C zwischen 1 000 und 20 000 mPas sowie mit einem Zusatz an Harzen und Ölen. Die Erfindung betrifft ebenso die Herstellung dieses Schmelzklebstoffes sowie seine Verwendung.

Ein derartiger Schmelzklebstoff ist bekannt. In der EP 0 442 045 B1 wird nämlich eine sprühbare Heißschmelzmasse auf der Basis des obengenannten Poly-α-olefins mit nicht über 30 Gew.-% an Zusätzen, insbesondere an Wachsen und/oder Harzen, beschrieben. Auch der Einsatz von paraffinischen oder aromatischen Ölen ist möglich. Die Beispiele enthalten Ethen/Propen/Buten-1-Terpolymere und plastische Mikrowachse sowie teilweise auch ein Kohlenwasserstoff-Harz. Die Viskositäten liegen bei 2 700 bzw. 3 400 mPas bei 190 °C.

In der technischen Information "Vestoplast: Klebrohstoff für Hot-Melt-Anwendungen" des Unternehmens Hüls aus dem Jahre 1996 wurde eine Reihe von ataktischen Poly-α-olefin-Co- und Terpolymeren aus den Monomeren Ethylen; Propylen und 1-Buten beschrieben. Derartige Polymere besitzen auf unpolaren Substraten, wie z.B. Polyethylen und Polypropylen, ein ausgezeichnetes Benetzungsverhalten. Eine Steigerung der Klebkraft kann durch Kombination mit klebrigmachenden Harzen oder Weichmachern erreicht werden. An Harzen werden insbesondere weitgehend gesättigte Kohlenwasserstoff-Harze empfohlen.

Bis zu einer Zusatzmenge von 30 % wirkt das Harz als Weichmacher. Oberhalb von 35 % nimmt die Mischung die Eigenschaft des Harzes an und wird hart und spröde. Die Zugfestigkeit nimmt bei einer Mischung aus Poly-α-olefin und Harz im Verhältnis von 70 zu 30 Gew.-Teilen um mindestens 20 % ab, wenn das Verhältnis auf 50 zu 50 Gew.-Teile zu Lasten des Poly-α-olefins verändert wird.
Der Zusatz von Wachsen dient unter anderem zur Feineinstellung der Viskosität und zur Verringerung des Fädenziehens. Als Weichmacher werden in den meisten Fällen Polybutene mit einem niedrigeren Molekulargewicht empfohlen. Preisgünstiger ist es, paraffinische oder naphthenische Mineralöle zu verwenden. Die Richtrezeptur für sprühbare Schmelzklebstoffe für Hygieneartikel enthält 70 Teile Vestoplast 704 (ein Poly-α-olefin), 25 Teile Escorez 5380 (ein hydriertes Polycyclopentadien), 5 Teile Napvis D 10 (ein bei Raumtemperatur flüssiges Polybuten) und 0,4 Teile Irganox 1010 (ein Antioxidans für Polyolefine). Dieser bekannte Sprüh-Schmelzklebstoff hat eine Schmelzviskosität von 2 000 mPas bei 190 °C und einen Erweichungspunkt von 91 °C.
Dieser sprühbare Schmelzklebstoff zeigt keine guten Klebeeigenschaften. So sind insbesondere die Haftwerte schon anfangs niedrig und sie verringern sich noch bei weiterer Lagerung. Weitere Nachteile sind eine deutliche Verringerung der Haftwerte im nassen Zustand, die sogenannten "Naßwerte" oder "Naßfestigkeit".
Da die in dieser Erfindungsmeldung beschriebenen Klebstoffe insbesondere Verwendung zur Herstellung eines Verbundwerkstoffes finden, beispielsweise für einen mindestens einen Vliesstoff ("nonwoven") enthaltenen Verbundwerkstoff, ist es unerläßlich, daß die Haftwerte bei einer Lagerung, wie auch die im nassen Zustand erreichten Haftwerte die Anfangswerte nicht unterschreiten. Die Klebstoffe finden in zunehmenden Maße Eingang in viele Bereiche des täglichen Lebens, da sie in der Regel eine einfache, dauerhafte und sichere Methode zur Fixierung von Materialien darstellen. Verbundwerkstoffe, wie sie insbesondere im Bereich der persönlichen Hygiene vorkommen, sind meist Materialien mit begrenzter Gebrauchsdauer, die beispielsweise nach einmaliger Benutzung weggeworfen werden, insbesondere Einmalprodukte. Zu diesen Produkten zählen vornehmlich Windeln, Binden oder Slipeinlagen etc., deren Aufgabe es ist, Körperflüssigkeiten wie z.B. Urin und Blut aufzunehmen. Aufgrund dieser Tatsache muß der im Verbundwerkstoff eingesetzte Klebstoff auch im "nassen" Zustand den Verbund zusammenhalten. Dies ist nur möglich, wenn die sogenannten "Naßwerte" im Niveau der Anfangswerte liegen.

In der EP 211 311 wird ein selbstklebender absorptionsfähiger Formkörper und ein Verfahren zum Herstellen eines dafür geeigneten Haftschmelzklebers beschrieben. Der Haftschmelzkleber besteht aus 20 bis 80 % von im wesentlichen amorphen olefinischen Polymeren, 20 bis 80 % von klebrig machenden Harzen und 0 bis 80 % an Weichmacheröl, wobei die Polymere ataktisch sind und der Haftschmelzkleber eine Scherfestigkeit von weniger als 1 Minute aufweist (Normprüfung gegen Stahl). Es wird nur ein olefinisches Polymer konkret genannt. Es hat eine Schmelzviskosität bei 190 °C von ca. 50 000 mPas.

US5021257 und US4210570 legen Klebstoffe aus Propylen Copolymer, einem Kohlenwasserstoffharz und einem Öl offen. Es handelt sich auch nicht um Olefin-Polymer Gemische und durch ihre Viskosität sind die Klebstoffe für Sprayanwendungen nicht geeignet

WO97/15636 offenbart in Vergleichsbeispiel G Klebstoffgemische einer Viskosität von 3000 mPas bei 180° aus VESTOPLAST 708 (Viskosität 8000+/-2000 mPas bei 190°C, Erweichungspunkt 106°C, 35 Teile) und VESTOPLAST 750 (Viskosität 50000+/-10000 mPas bei 190°C, Erweichungspunkt 107°C, 15 Teile), Escorez 5380 (Erweichungspunkt 85°C) und Parapol 950 (Viskosität 220 cSt/100°C).

WO97/33921 offenbart auch Klebstoffgemische aus einem Ethylencopolymer, Harz und Öl, die nicht für Sprühanwendungen geeignet sind.

Die erfindungsgemäße Aufgabe besteht daher darin, die Haftung zu verbessern. Das gilt vor allem für die Anfangshaftung, aber auch für die Haftung nach einer gewissen Alterung sowie der Naßfestigkeit. Darüber hinaus sollten aber auch möglichst noch die Haftwerte von den Verarbeitungsbedingungen unabhängiger werden, insbesondere von der Sprühtemperatur, der Auftragsmenge und der Applikationsart. Die Sprüheigenschaften sowie weitere wichtige Verfahrens- und Gebrauchs-Eigenschaften sollten jedoch möglichst nicht verschlechtert werden.

Die erfindungsgemäße Lösung ist den Patentansprüchen zu entnehmen und besteht aus
1. Sprühbarer Schmelzklebstoff mit einer Schmelzviskosität von 500 bis 4 000 mPas bei 150 °C nach AStM D 3236-88 mit folgender Zusammensetzung:
   A) 30 bis 70 Gew.-% eines Poly-α-olefin-Gemisches mit einem Erweichungspunkt (Ring- und Kugel-Methode) zwischen 70 und 130 °C und einer Schmelzviskosität bei 190 °C zwischen 1 000 und 20 000 mPas nach ASTM D 3236-88,
   B) 5 bis 30 Gew.-% mindestens eines dünnflüssigen Öls mit einer Viskosität von 20 bis 300 mPas bei 20 °C nach DIN 51562,
   C) 20 bis 60 Gew.-% mindestens eines Kohlenwasserstoff-Harzes mit einem Erweichungsbereich von 70 bis 140 °C nach ASTM E 28 und
   D) gegebenenfalls Zusätzen.
Bevorzugt besteht sie im wesentlichen in der Zusammensetzung des sprühbaren Schmelzklebstoffes, aus
A) 30 bis 70 Gew.-%, vorzugsweise 35 bis 50 Gew.-% eines weitgehend amorphen Poly-α-olefins bzw. Polyα-olefin-Gemisches mit einem Erweichungspunkt (Ring- und Kugel-Methode) zwischen 70 und 130 °C und einer Schmelzviskosität bei 190 °C zwischen 1 000 und 20 000 mPas sowie vorzugsweise mit einer Dichte < 0,90 g/cm³ einer Nadelpenetration zwischen 0,8 und 4,0 mm, einem Molekulargewicht gemäß Gelpermeationschromatographie von max. 100 000 (Gewichtsmittel) bzw. mindestens 4 000 (Zahlenmittel), wobei die aus dem Gewichtsmittel und dem Zahlenmittel des Molekulargewichtes gebildete Differenz den sechsfachen Wert des Zahlenmittels nicht übersteigen darf,
B) 5 bis 30 Gew.-%, insbesondere 15 bis 25 Gew.-% mindestens eines Öls aus einem bei 20 °C flüssigen gesättigten Kohlenwasserstoff mit relativ niedrigem Dampfdruck, insbesondere mindestens eines Mineralöls, sei es auf paraffinischer oder naphthenischer Basis und vor allem mindestens eines medizinischen Weißöls,
C) 20 bis 60 Gew.-%, insbesondere 25 bis 50 Gew.-% mindestens eines Kohlenwasserstoff-Harzes mit einem Erweichungsbereich von 70 bis 140, insbesondere von 80 bis 120 °C, wobei als Kohlenwasserstoff-Harze vor allem Harze mit 5 bis 9 C-Atomen in Frage kommen, wobei diese teil- bzw. vollhydrogenierte, aliphatische und aromatische Kohlenwasserstoffharze, Polyterpenharze und modifizierte Polyterpenharze sowie Naturharze beinhalten, und
D) gegebenenfalls Zusätzen wie Wärme- und Licht-Stabilisatoren, optische Aufheller, Antistatika, Gleit- und Antiblockmittel, Nukleierungsmittel, Farbstoffe, Pigmente sowie flammhemmende Mittel,
mit einer Viskosität von 500 bis 4 000, insbesondere von 700 bis 1 900 mPas (Brookfield Modell RVT DV II, 150 °C, Spindel 27; nach ASTM D 3236-88).

Bei den Poly-α-olefinen (Komponente A) handelt es sich um Polymere, wie sie in der EP 0 442 045 B1 beschrieben sind. Ihr Inhalt wird ausdrücklich auch zum Gegenstand der vorliegenden Anmeldung gemacht.

Bevorzugte Polyolefine sind entweder vollständig amorph oder weisen nur eine geringe Kristallinität auf. Die Schmelzwärme zum Aufheizen auf 180 °C (ΔH) nach DTA-Analyse in Anlehnung an DIN 53765 sollte daher nur zwischen 330 bis 500 J/g, insbesondere 370 bis 450 J/g liegen. Die spezifische Wärmekapazität von 20 bis 200 °C sollte nach DTA-Analyse in Anlehnung an DIN 53765 zwischen 1,0 bis 4,0 J/g · K, insbesondere zwischen 1,7 bis 3,2 J/g · K liegen. Die Glasübergangstemperatur Tg , die ebenfalls mittels DTA-Analyse gemäß DIN 53765 zu bestimmen ist, sollte in einem Bereich von -15 °C bis -40 °C, insbesondere -20 °C bis -38 °C liegen.

Geeignete Produkte können beispielsweise hergestelit werden durch radikalischen Abbau marktgängiger, weitgehend amorpher Poly-α-olefine mit Erweichungspunkten zwischen 80 und 140 °C und Viskositäten zwischen 5 000 und 100 000 mPas bei 190 °C. Diese Herstellungsmethode ist Gegenstand der deutschen Patentanmeldung P 40 00 695.6. Sie können aber auch durch jedes andere Verfahren hergestellt werden, vorausgesetzt, sie weisen anschließend die anspruchsgemäßen Merkmale auf.
Geeignete, weitgehend amorphe Poly-α-olefine können zur Verbesserung der Haftung auf üblichen Substraten funktionelle Gruppen tragen. Diese funktionellen Gruppen können entweder durch Copolymerisation mit geringen Mengen funktioneller Monomerer oder vorzugsweise durch radikalische Umsetzung marktgängiger Poly-α-olefine mit derartigen funktionellen Monomeren eingebracht werden. Geeignete Monomere sind beispielsweise Maleinsäureanhydrid, Fumarsäure, Acryl- und Methacrylsäure, Itaconsäure, Aconitsäure und deren Derivate wie z.B. Ester oder Amide sowie Vinyltrimethoxysilan (VTMO) und 3-Methacryloxypropyltrimethoxysilan (MEMO; H₂C = C(CH₃)COO(CH₂)₃Si-(OCH₃)₃). Sie werden üblicherweise in Mengen von 0,1 bis 10 Gew.-%, vorzugsweise 0,5 bis 5 Gew.-%, bezogen auf das Poly-α-olefin, eingesetzt. Dabei werden übliche Radikalstarter wie z.B. Dicumylperoxid oder 2,2'-Azo-bis(2-acetoxy-propan) in Mengen von 0,05 bis 3 Gew.-%, vorzugsweise von 0,1 bis 2 Gew.-% eingesetzt. Die Pfropfreaktion findet dann bei erhöhten Temperaturen, in der Regel zwischen 100 und 300 °C statt. Man erhält auf diese Weise Polymere mit hoher Kohäsion und verbesserter Adhäsion gegenüber bestimmten Substraten wie Metall-, Kunststoff- oder Glasoberflächen.

In einer bevorzugten Ausführungsform ist das weitgehend amorphe Poly-α-olefin ein binäres oder ternäres Copolymerisat aus Olefinen mit 2 bis 10 Kohlenstoffatomen. Dieses Copolymerisat hat im Vorzugsbereich folgende Monomerenzusammensetzung:
3 bis 75 Gew.-% eines α-Olefins mit 4 bis 10 Kohlenstoffatomen,
25 bis 95 Gew.-% Propen und
0 bis 20 Gew.-% Ethen.

Darüber hinaus können, wie bereits erwähnt, noch funktionelle Monomere einpolymerisiert sein. In einer besonders bevorzugten Ausführungsform wird als α-Olefin mit 4 bis 10 Kohlenstoffatomen Buten-1 verwendet. Selbstverständlich können auch Mischungen verschiedener erfindungsgemäßer Poly-α-olefine eingesetzt werden.

Zweckmäßigerweise enthält das Poly-α-olefin-Gemisch mindestens ein Poly-α-olefin mit einer Schmelzviskosität im Bereich von 40 000 bis 60 000 und mindestens ein Poly-α-olefin mit einer Schmelzviskosität im Bereich von 3 000 bis 10 000 Pas bei 190 °C.

Vorteilhafterweise beträgt die Schmelzviskosität des Poly-α-olefins bzw. des Poly-α-olefin-Gemisches 2 000 bis 15 000 mPas bei 190 °C.

Derartige Poly-α-olefine werden unter folgenden Handelsbezeichnungen vertrieben: Vestoplast®, Rexene® usw..

Die Komponente B umfaßt Öle aus bei 20 °C flüssigen, insbesondere dünnflüssigen (20 bis 300 mPas), weitgehend gesättigten Kohlenwasserstoffen mit einem relativ niedrigen Dampfdruck, insbesondere Mineralöle, sei es auf paraffinischer oder naphthenischer Basis und vor allem medizinische Weißöle, welche nach FDA 175 105 für Lebensmittel zugelassen sind. Diese Weißöle haben eine Viskosität von 25 bis 230 mPas, insbesondere von 110 bis 230 mPas, gemessen nach DIN 51562 bei 20 °C. Diese Öle dienen u.a. zur Feineinstellung der Viskosität. Derartige Öle werden unter folgenden Handelsbezeichnungen vertrieben: Primol352®, Essomarcol-Reihe®, Pionier 0352®; Drakeol35 ®; Kaydol®, Ondina G-Reihe®, Catenex-Öle N® usw..

Die Komponente C beinhaltet vor allem als Kohlenwasserstoff-Harz ein Kohlenwasserstoff-Harz aus Bausteinen mit 5 bis 9 C-Atomen, insbesondere ein weitgehend, insbesondere vollständig hydriertes Polycyclopentadien-Harz. Konkrete Beispiele dafür sind: MBG®-Reihe; Regalite R und S®-Reihe; Zonarez®-Reihe; Zonatac®-Reihe; Betaprene® AC, AF, AL, AR, B, BC, BR-Reihe; Betalite®-Reihe; Eastotac-Reihe®; ECR-Reihe®; Escorez-Reihe®; Wingtack-Reihe® usw..

Die Komponenten B und C sollten zusammen mindestens 30, vorzugsweise mindestens 35 und insbesondere mindestens 45 Gew.-% ausmachen, bezogen auf die Summe der Komponenten A, B und C. Mit anderen Worten: Der Gehalt des Poly-α-olefins sollte maximal 70 %, insbesondere max. 65 und vor allem max. 55 Gew.-% betragen, bezogen auf die Komponenten A, B und C.

Um ein besonders gleichmäßiges Sprühbild auch bei relativ niedrigen Schmelze-Temperaturen von z.B. 130 °C zu bekommen, sollten die Komponenten A, B und C innerhalb des beanspruchten Bereiches so gewählt werden, daß die Schmelzviskosität bei 100 °C in Abhängigkeit von der Scherrate zwischen 0 und 250 sec⁻¹ im Bereich von 5 bis 15 Pas ± 15, insbesondere ± 10 % liegt. Auch bei 130 °C zeigt sich ein newtonisches Fließverhalten. Die Messungen werden gemäß DIN 53018-1 durchgeführt.

Bei den erfindungsgemäßen Schmelzklebstoffen handelt es sich vorzugsweise um nicht-haftklebrige Schmelzklebstoffe. Neben dem Anteil der Komponenten A, B und C ist die Auswahl der Art der Komponenten von großer Bedeutung. So sollte die Schmelzviskosität des Poly-α-olefins bzw. des Poly-α-olefin-Gemisches 2 bis 15 Pas bei 190 °C (Brookfield) betragen.

Neben diesen wesentlichen Komponenten können noch weitere Stoffe zugesetzt werden, z.B. Wärme- und Licht-Stabilisatoren, optische Aufheller, Antistatika, Gleit- und Antiblockmittel, Nukleierungsmittel und Farbstoffe, Pigmente sowie flammhemmende Mittel.

Als Antioxidans kommt vor allem Irganox 1010 in Frage, und zwar in einer Menge von 0 bis 3 Gew.-%, bezogen auf den Schmelzklebstoff insgesamt. Weitere Stabilisatoren sind vor allem Irganox PS 800; Irgastab DBTM, Tinuvin P, Wingstay-Reihe; Wingstay SN-1; Evernox 10 usw..

Es können auch vollsynthetische thermoplastische Polymere zugesetzt werden, insbesondere Polypropylen, z.B. um die Erweichungstemperatur zu verändern. Dazu geeignete Polypropylentypen sind: ataktisches Polypropylen, Homo-Polypropylen, statistische Copolymere, Blockcopolymere und Pfropfcopolymere von Propylen. Aber auch andere synthetische Polymere kommen in Frage, z.B. Ethylen/Vinylacetat-Copolymere, Ethylen/Acrylsäure-Copolymere, Polyisobuten, Polybuten, isotaktisches Poly-1-buten, Styrolblockcopolymere und Kautschuk. Ihr Anteil beträgt 0 bis 50 Gew.-%, vorzugsweise 15 bis 45 Gew.-%, bezogen auf den Schmelzklebstoff insgesamt.

Zur Herstellung des Schmelzklebstoffes werden die obengenannten Rohstoffe in der Schmelze unter einer Inertgas-Atmosphäre und/oder unter Vakuum gemischt, bis sie homogen sind. Die Temperatur der Schmelze beträgt zweckmäßigerweise 150 bis 200 °C. Weiterhin ist zu beachten, daß der hergestellte Schmelzklebstoff keine Stippen hat.

Der erhaltene Schmelzklebstoff ist im wesentlichen gekennzeichnet durch seine Viskosität von 500 bis 4 000, vorzugsweise von 700 bis1 900 mPas bei 150 °C, gemessen nach Brookfield Modell RVT DVII; 150 °C; Spindel 27, nach ASTM D 3236-88.
Außerdem ist er gekennzeichnet durch seine gute Sprühbarkeit, und zwar sowohl wenn es um das "Atomisieren" der Schmelze als auch um das sogenannte "Spinnsprühen" geht.
Beim erstgenannten Verfahren handelt es sich um ein Zerstäuben der Schmelze in feine Schmelzetröpfchen, während beim "Spinnsprühen" ein Schmelzefaden drallförmig die Sprühdose verläßt und, ohne abzureißen, in einer spiralförmigen Bahn auf dem zu beschichtenden Substrat abgelegt wird. Die Sprühtechnologie erlaubt generell einen kontaktlosen Auftrag und das Beschichten von unebenen, unregelmäßigen Flächen. Sie eignet sich weiterhin für Anwendungen, wo zwar einerseits eine flächige Verklebung gewünscht wird, andererseits aber gefordert wird, daß die verklebte Ebene für Luft oder Feuchtigkeit durchlässig ist. Durch die Tatsache, daß kein vollflächiger Auftrag erfolgt, kann Material eingespart werden. Ein weiterer Vorteil zeigt sich bei der Beschichtung temperaturempfindlicher Substrate. Durch den kontaktlosen Auftrag und aufgrund des sehr geringen Wärmeinhalts der ankommenden Schmelze bzw. des Schmelzefadens wird das Substrat weit weniger belastet bzw. geschädigt als bei den üblichen Auftragstechnologien. Die Hotmelt-Sprühtechnologie ist umweltfreundlich und deckt insgesamt viele Anwendungen ab, die bislang den gesprühten lösungsmittelbasierten Klebstoffen vorbehalten waren.

Die gute Sprühbarkeit bezieht sich selbstverständlich sowohl auf das eingangs erwähnte "Atomisieren" als auch auf das "Spinnsprühen". Für ein gleichmäßiges, durch Spinnsprühen erzeugtes Sprühbild ist bei der jeweiligen Applikationstemperatur eine von der Schergeschwindigkeit weitgehend unabhängige Viskosität der zu sprühenden Masse erforderlich. Wäre dies nicht der Fall, so würde man beispielsweise bei intermittierenden Sprühvorgängen keine konstante Sprühbreite erreichen können. Sowohl beim Beginn als auch bei Beendigung des jeweiligen Sprühzyklus wäre dann aufgrund niedrigerer Schergeschwindigkeit die Viskosität erhöht und demzufolge das Sprühbild verändert.

Das Sprühverhalten zeichnet sich insbesondere durch folgende Eigenschaften aus:
a) Temperaturschwankungen zwischen 140 und 160 °C wirken sich auf die Haftwerte nur in einem Ausmaß von ± 14 % aus, bezogen auf ein Auftragsgewicht von 4 g/m².
b) Schwankungen im Auftragsgewicht innerhalb von 2 bis 4 g/m² wirken sich auf die Haftwerte nur im Bereich von ± 7 % aus.
c) Auch die Applikationsmethoden wie Control Coat oder Spinnsprühen haben auf die Haftwerte einen nur geringen Einfluß, nämlich ± 6 %.
Weitere positive Eigenschaften des erfindungsgemäßen Schmelzklebstoffes sind nicht nur seine hohe Anfangshaftung, sondern auch die Steigerung der Haftwerte nach Alterung. Sie liegen im Bereich von 20 bis 60 %.
Weitere positive Eigenschaften der erfindungsgemäßen Klebstoffe sind: Steigerung der Haftwerte bezüglich der Naßfestigkeit um 29 % bis 126 % und Faserriß des Verbundwerkstoffes nach erfolgter Alterung sowie bei der Naßfestigkeit und auch beim Anfangshaftwert.

Die erfindungsgemäßen Schmelzklebstoffe eignen sich zum Verbinden unterschiedlichster Materialien. So lassen sich Materialien wie Polyolefinfolien, beispielsweise Polyethylenfolien oder Polypropylenfolien, Polyolefinvliese, beispielsweise Polyethylenvliese oder Polypropylenvliese, Polyurethanfolien, Polyurethanschäume, Folien oder Formkörper aus Cellulosederivaten, beispielsweise aus Zellstoff (Tissues), Folien oder Formkörper aus Polyacrylaten oder Polymethacrylaten, Folien oder Formkörper aus Polyester untereinander verbinden. Eine Verbindung ist dabei sowohl unter gleichen Materialien als auch unter verschiedenen Materialien möglich.

In einer bevorzugten Ausführungsform des erfindungsgemäßen Verfahrens wird der Klebstoff zur Herstellung eines mindestens eine Vliesstofflage enthaltenden Verbundwerkstoffs eingesetzt. Besonders bevorzugt ist es, wenn als Vliesstofflage ein Polypropylen-Spinnvlies mit einem Flächengewicht von etwa 10 bis etwa 30 g/m², insbesondere etwa 15 bis etwa 20 g/m² eingesetzt wird.

Als zweites, mit dem Substrat zu verklebendes Material eignet sich insbesondere eine Vliesstofflage, vorzugsweise eine Vliesstofflage, die ein Polyolefin enthält oder aus einem Polyolefin besteht.

Unter einer "Vliesstofflage" wird im Rahmen der vorliegenden Erfindung ein flexibles Flächengebilde verstanden, das nicht durch die klassische Methode der Gewebebindung von Kette und Schuß oder durch Maschenbildung, sondern durch Verschlingung und/oder kohäsive und/oder adhäsive Verbindung von Texilfasern hergestellt wird. Unter Vliesstoffen werden damit lockere Materialien aus Spinnfasern oder Filamenten, meist aus Polypropylen, Polyester oder Viscose hergestellt, verstanden, deren Zusammenhalt im allgemeinen durch die den Fasern eigene Haftung gegeben ist. Hierbei können die Einzelfasern eine Vorzugsrichtung aufweisen (orientierte oder Kreuzlage-Vliese) oder ungerichtet sein (Wirrvliese). Die Vliese können mechanisch verfestigt werden durch Vernadeln, Vermaschen oder durch Verwirbeln mittels scharfer Wasserstrahlen (sog. spunlaced Vliese). Adhäsiv verfestigte Vliese entstehen durch Verkleben der Fasern mit flüssigen Bindemitteln (beispielsweise Acrylat-Polymere, SBR/NBR, Polyvinylester- oder Polyurethan-Dispersionen) oder durch Schmelzen bzw. Auflösen von sogenannten Bindefasem, die dem Vlies bei der Herstellung beigemischt wurden. Bei der kohäsiven Verfestigung werden die Faseroberflächen durch geeignete Chemikalien gelöst und durch Druck verbunden oder bei erhöhter Temperatur verschweißt. Vliese aus sogenannten Spinnvliesen, d.h. durch Verspinnen und anschließendes Ablegen, Aufblasen oder Aufschwemmen auf ein Transportband hergestellte Flächengebilde, nennt man Spinnvliesstoffe. Zusätzliche Fäden, Gewebe oder Gewirke enthaltende Vliesstoffe gelten als verstärkte Vliesstoffe.

In einer bevorzugten Ausführungsform des erfindungsgemäßen Verfahrens wird der Klebstoff zur Herstellung eines mindestens eine Vliesstofflage enthaltenden Verbundwerkstoffs eingesetzt, vor allem zum Verkleben von Folien, insbesondere aus Polyolefinen, und von Vliesen, insbesondere aus Polypropylen, wobei die Auftragstemperatur zwischen 120 und 180 °C, vorzugsweise zwischen 140 und 160 °C liegt und das Auftragsgewicht zwischen 2 und 10, vorzugsweise zwischen 3 bis 4 g/m² variiert und die Auftragsgeschwindigkeit zweckmäßigerweise zwischen 50 und 400 m/min liegt. Besonders bevorzugt ist es, wenn als Vliesstofflage ein Polypropylen-Spinnvlies mit einem Flächengewicht von etwa 10 bis etwa 30 g/m², insbesondere etwa 15 bis etwa 20 g/m² eingesetzt wird.

Aufgrund dieser positiven Eigenschaften eignen sich die erfindungsgemäßen Schmelzklebstoffe für Kontruktionsverklebungen im Hygienebereich, insbesondere zum Verkleben von Windeln, Inkontinenzartikeln, Slipeinlagen und Damenbinden.

Weitere Anwendungen sind Verpackungsindustrie, Automobilzulieferindustrie, Bauindustrie usw..

Die Erfindung wird nun anhand von Beispielen erläutert.

### I Ausgangsstoffe zur Herstellung der Schmelzklebstoffe

1. Poly-α-olefine: Vestoplast 508, 704 und 750 (Terpolymere aus Ethylen, Propylen und Butylen) der Fa. Hüls AG.
2. Öle: Primol 352 der Fa. Esso, ein medizinisches Weißöl,
3. Harze: MBG-278 und Regalite R-R91 (Cyclopentadienharze) der Fa. Hercules,
4. Antioxidantien: Irganox 1010 der Fa. Ciba Geigy.

### II Herstellung und Eigenschaften der Schmelzklebstoffe

Zur Herstellung der Schmelzklebstoffe werden die obengenannten Ausgangsstoffe entsprechend den in Tabelle 1a) angegebenen Mengenanteilen in der Schmelze bei 160 bis 170 °C in der Reihenfolge Öl + Antioxidans, Harz und Poly-α-olefin aufgeschmolzen und solange bei 160 bis 170 °C gerührt, bis die Mischung stippenfrei (homogen) wurde. Dazu wurden im allgemeinen 2 bis 4 Stunden benötigt. Weiterhin ist es zweckmäßig, unter Vakuum und/oder Inertgas-Atmosphäre (Stickstoff) zu arbeiten.

Die erhaltenen Schmelzklebstoffe haben die in der Tabelle 1b) angegebenen Eigenschaften.

### III Klebetechnische Untersuchungen der Schmelzklebstoffe

1. Die Sprühversuche wurden mit dem Gerät CT 325 der Fa. Meltex, Lüneburg, durchgeführt. Als Sprühköpfe wurden die Modelle CF 203 und CF 205 der Fa. Nordson verwendet. Das Kürzel CF steht für Controlled Fiberisation. Bei den hier eingesetzten CF-Auftragsköpfen wird der aus der Düse austretende Klebstoff durch gezielte Verwirbelung mit Druckluft in eine spiralförmige Bewegung versetzt. Dieses Verfahren ermöglicht ein kontrolliertes, flächendeckendes und kantenscharfes Applizieren von Schmelzklebern.

| | |
|---|---|
| Auftragsmenge | 3,0 bis 4,0 g · m⁻² |
| Auftragsgeschwindigkeit | 100 m · min⁻¹ |
| Temperatur im Schmelzbehälter | 160 °C |
| Sprühlufttemperatur | 180 °C |
| Klebstofftemperatur | 160 °C |

Mit diesen Angaben wurden Verbunde hergestellt, bei denen einerseits auf die Folie gesprüht wurde und das Vlies gegenlief und bei denen andererseits auf das Vlies gesprüht wurde und die Folie gegenlief. Außer diesen Versuchen bei einer Klebstoff-Temperatur von 160 °C (Versuche A) wurden auch Versuche bei einer Klebstofftemperatur von 140 °C durchgeführt (Versuche B).
Als Folie wurde verwendet 4P-PE-Folie, d.h. eine Polyethylen-Folie mit einer Dicke von etwa 10 bis etwa 50 µm, insbesondere etwa 20 bis etwa 30 µm.
Als Vlies wurde verwendet Corosoft Plus H, einem Vlies aus Polypropylen mit einem Flächengewicht von 14 bis 30 g/m², insbesondere 17 g · m⁻².
Der Schmelzklebstoff wurde im Falle a) auf die Folie gesprüht, die dann mit dem Vlies verbunden wurde. Im Falle von b) wurde der Klebstoff auf das Vlies gesprüht, welches dann mit der Folie verbunden wurde.
2. Die Haftwert-Untersuchungen sind in Tabelle 1 c) zusammengefaßt.

### IV Ergebnisse

Die Untersuchungen der Beispiele 1 und 2 zeigen, verglichen mit dem Vergleich:
- eine deutliche Erhöhung der Anfangsfestigkeit bis hin zum Faserriß unabhängig vom Auftragsgewicht und unabhängig von der Herstellung des Verbundes (Mit anderen Worten, es wurden einerseits die Haftwerte beim Verbund Folie / Vlies, wie auch beim Verbund Vlies / Folie deutlich verbessert.),
- eine deutliche Erhöhung der Haftwerte mit Faserriß nach erfolgter Alterung, bezogen auf die Anfangsfestigkeit, unabhängig von der Herstellung des Verbundes und
- eine deutliche Erhöhung der Naßhaftwerte mit Faserriß, bezogen auf die Anfangsfestigkeit, unabhängig von der Herstellung des Verbundes und
- eine deutliche und schrittweise Reduzierung der Haftwerte der Vergleichsprobe nach der Alterung und beim Naßtest.

### V Beschreibung der Meßmethoden:

- Schmelzviskosität Brookfield Modell RVT DV II, 150 °C oder 190 °C, Spindel 27; nach ASTM D 3236-88,
- Erweichungspunkt nach ASTM E 28,
- Nadelpenetration (100/25/5) in Anlehnung an DIN 52010 in 0,1 mm,
- Schälfestigkeit (sogenannter Haftwert) in Anlehnung an DIN 53 530 mit einer Zugprüfmaschine der Fa. Zwick Typ 1435 bei 20 °C und 50 % rel. Luftfeuchte. Das Muster von 50 mm Breite wird mit einer Geschwindigkeit von 300 mm/min in einem Winkel von 180 °C getrennt. Die Angabe erfolgt in Ncm⁻¹. Die Musterbeschichtung wurde frühestens nach 48 h vermessen.
- Alterungsverhalten wurde durch eine sogenannte Schnellalterung simuliert (72 h bei 60 °C, mit anschließender Abkühlzeit von mind. 24 h).
- Naßfestigkeit (zu vermessende Probe wird 1 h in eine 0,9 %ige NatriumchloridLösung eingelegt und anschließend vermessen, interne Prüfmethode).
- Kristallinität nach DTA-Analyse in Anlehnung an DIN 53765.
- Dichte nach DIN 53479.
- Fließverhalten nach DIN 53018-1.

Mit Hilfe des Rotationsviskosimeters AR 1000 der Firma TA Instruments wurden die rheologischen Untersuchungen der Hotmelts durchgeführt.
Hierzu wurde beim scherratenabhängigen Fließversuch eine Platte/Platte-Geometrie (4 cm Durchmesser, 500 µm Abstand) verwendet. Der Klebstoff wurde 5 min bei der Meßtemperatur zwischen der Platte/Platte-Geometrie temperiert. Anschließend wurd schergeschwindigkeitsabhängig von 0 bis 250 s⁻¹ bzw. 250 bis 0 s⁻¹ in einem Zeitraum von jeweils 5 min kontinuierlich die Viskosität ermittelt. Bei Proben, die ein newtonisches Fließverhalten haben, ist die Viskosität unabhängig von der Scherrate.

**Tab. 1a):**

| **Zusammensetzung der Schmelzklebstoffe** | | | | |
|---|---|---|---|---|
| Rohstoffe | | Schmelzklebstoff | | |
| Rohstoffart | Handels- / Anteil name | Beispiel 1 | Beispiel 2 | Vergleich |
| APAO | Vestoplast 704 % | 22,5 % | 35,0 % | 70 % |
| APAO | Vestoplast 508 % | 22,5 % | - | - |
| APAO | Vestoplast 750 % | - | 5,0 % | - |
| Weichmacher | Napvis D-10 % | - | - | 5,0 % |
| Öl | Primol 352 % | 19,0 % | 19,0 % | - |
| Harz | MBG - 278 % | 35,0 % | 20,0 % | - |
| Harz | Regalite (R)-R 91 % | - | 20,0 % | - |
| Harz | Escorez 5380 % | - | - | 25,0 |
| Antioxidans | Irganox 1010 % | 1,0 % | 1,0 % | 0,4 % |

**Tab. 1 b):**

| **Eigenschaften der Schmelzklebstoffe** | | | |
|---|---|---|---|
| Eigenschaft | Beispiel 1 | Beispiel 2 | Vergleich |
| Schmelzviskosität [mPas] bei 150 °C | 1485 | 1137 | 4580 |
| Nadelpenetration [(100/25/5) 0,1 mm] | 42 | 89 | 17 |
| Erweichungspunkt [°C] | 79 | 76 | 96 |

**Tab. 1c):**

| **Haftwerte der Verklebungen von Folie und Vlies** | | | | |
|---|---|---|---|---|
| a) Klebstoff auf Folie gesprüht | | | | |
| Haftwerte | Beispiel 1 A | Beispiel 2 A | Vergleich A | Beispiel 1 B |
| Auftrag in g m⁻² | ca. 3,6 | ca. 3,4 | 4,0 | ca. 4,0 |
| Haftwert in N cm⁻¹ | 0,54 | 0,48 | 0,28 | 0,68 |
| Haftwert in N cm⁻¹ nach Alterung | 0,84 | 0,64 | 0,20 | 0,78 |
| Naßfestigkeit N · cm⁻¹ | 1,22 | 0,62 | 0,12 | 0,80 |

| b) Klebstoff auf Vlies gesprüht | | | | |
|---|---|---|---|---|
| Haftwerte | Beispiel 1 A | Beispiel 2 A | Vergleich A | Beispiel 1 B |
| Auftrag in g m⁻² | ca. 3,6 | ca. 3,4 | ca. 3,8 | ca. 3,6 |
| Haftwert in N cm⁻¹ | 0,70 | 0,52 | 0,30 | 0,70 |
| Haftwert in N cm⁻¹ nach Alterung | 0,84 | 0,63 | 0,26 | 0,62 |
| Naßfestigkeit N · cm⁻¹ | 1,28 | 0,62 | 0,08 | 0,54 |

## Patentansprüche

1. Sprühbarer Schmelzklebstoff mit einer Schmelzviskosität von 500 bis 4 000 mPas bei 150 °C nach AStM D 3236-88 mit folgender Zusammensetzung:
A) 30 bis 70 Gew.-% eines Poly-α-olefin-Gemisches mit einem Erweichungspunkt (Ring- und Kugel-Methode) zwischen 70 und 130 °C und einer Schmelzviskosität bei 190 °C zwischen 1 000 und 20 000 mPas nach ASTM D 3236-88,
B) 5 bis 30 Gew.-% mindestens eines dünnflüssigen Öls mit einer Viskosität von 20 bis 300 mPas bei 20 °C nach DIN 51562,
C) 20 bis 60 Gew.-% mindestens eines Kohlenwasserstoff-Harzes mit einem Erweichungsbereich von 70 bis 140 °C nach ASTM E 28 und
D) gegebenenfalls Zusätzen.

2. Schmelzklebstoff nach Anspruch 1, **gekennzeichnet durch** seine Viskosität im Bereich von 700 bis 1 900 mPas bei 150 °C, gemessen nach ASTM D 3236-88.

3. Schmelzklebstoff nach Anspruch 1, **dadurch gekennzeichnet; daß** das Poly-α-olefin-Gemisch weitgehend amorph ist und das Poly-α-olefin folgende Monomerenzusammensetzung aufweist:
- 3 bis 75 Gew,.-% eines α-Olefins mit 4 bis 10 Kohlenstoffatomen,
- 25 bis 95 Gew.-% Propen und
- 0 bis 20 Gew.-% Ethen.

4. Schmelzklebstoff nach Anspruch 1, **dadurch gekennzeichnet, daß** das Poly-α-olefin-Gemisch eine Schmelzviskosität bei 190 °C zwischen 2 000 und 15 000 mPas hat, gemessen nach ASTM D 3236-88.

5. Schmelzklebstoff nach Anspruch 1, **dadurch gekennzeichnet, daß** das Poly-α-olefin eine Dichte von < 0,90 g/cm³ hat, eine Nadelpenetration in Anlehnung an DIN 52010 zwischen 0,8 und 40 mm, ein Molekulargewicht gemäß Gelpermeationschromatographie von max. 100 000 (Gewichtsmittel) bzw. mindestens 4 000 (Zahlenmittel), wobei die aus dem Gewichtsmittel und dem Zahlenmittel des Molekulargewichtes gebildete Differenz den 6fachen Wert des Zahlenmittels nicht übersteigen darf.

6. Schmelzklebstoff nach Anspruch 1, **dadurch gekennzeichnet, daß** das Poly-α-olefin-Gemisch mindestens ein Poly-α-olefin mit einer Schmelzviskosität im Bereich von 40 000 bis 60 000 und mindestens ein Poly-α-olefin mit einer Schmelzviskosität im Bereich von 3 000 bis 10 000 mPas bei 190 °C enthält, gemessen nach ASTM D 3236-88.

7. Schmelzklebstoff nach Anspruch 1, **dadurch gekennzeichnet, daß** das Öl ein medizinisches Weißöl ist.

8. Schmelzklebstoff nach Anspruch 1, **dadurch gekennzeichnet, daß** das Kohlenwasserstoff-Harz ein KW-Harz mit 5 bis 9 C-Atomen ist.

9. Schmelzklebstoff nach Anspruch 1, **dadurch gekennzeichnet, daß** der Zusatz mindestens ein Stoff der folgenden Gruppe ist: Wärme- und Licht-Stabilisator, optischer Aufheller, Antistatikum, Gleit- und Antiblockmittel, Nukleierungsmittel, Farbstoff, Pigment oder flammhemmendes Mittel.

10. Schmelzklebstoff nach Anspruch 1, **dadurch gekennzeichnet, daß** die Summe der Komponenten B und C mindestens 30, vorzugsweise mindestens 35 und insbesondere mindestens 45 Gew.-% der Summe der Komponenten A + B + C ausmacht.

11. Schmelzklebstoff nach Anspruch 1, **dadurch gekennzeichnet, daß** die Komponente A, B und C so gewählt werden, daß die Viskosität bei 100 °C in Abhängigkeit von der Scherrate von 0 bis 250[sec⁻¹] im Bereich von 5 bis 15 Pas ± 15, insbesondere ± 10 % liegt.

12. Herstellung des Schmelzklebstoffes nach mindestens einem der Ansprüche 1 bis 11 durch Mischen der Rohstoffe unter einer Inertgas-Atmosphäre und/oder unter Vakuum im Temperaturbereich von 150 bis 200 °C.

13. Verwendung des Schmelzklebstoffes nach mindestens einem der Ansprüche 1 bis 11 für Konstruktionsverklebungen im Hygienebereich, insbesondere zum Verkleben von Windeln, Slipeinlagen und Damenbinden.

14. Verwendung des Schmelzklebstoffes nach mindestens einem der Ansprüche 1 bis 11 zum Verkleben von Folien, insbesondere aus Polyolefinen und von Vliesen, insbesondere aus Polypropylen, wobei die Auftragstemperatur zwischen 120 und 180 °C, vorzugsweise zwischen 140 und 160 °C liegt und das Auftragsgewicht zwischen 2 und 10, vorzugsweise zwischen 3 bis 4 g/m² variiert und die Auftragsgeschwindigkeit zweckmäßigerweise zwischen 50 und 400 m/min liegt.

## Claims

1. A sprayable hotmelt adhesive with a melt viscosity of 500 to 4,000 mPas at 150°C, as measured to ASTM D 3236-88,, **characterized by** the following composition:
A) 30 to 70% by weight of a poly-α-olefin mixture with a softening point (ring-and-ball method) of 70 to 130°C and a melt viscosity at 190°C of 1,000 to 20,000 mPas, as measured to ASTM D 3236-88,
B) 5 to 30% by weight of at least one thin-flowing oil with a viscosity of 20 to 300 mPas at 20°C, as measured to DIN 51562,
C) 20 to 60% by weight of at least one hydrocarbon resin with a softening range of 70 to 140°C, as measured to ASTM E 28, and
D) optionally additives.

2. A hotmelt adhesive as claimed in claim 1, **characterized by** a viscosity of 700 to 1,900 mPas at 150°C, as measured to ASTM D 3236-88.

3. A hotmelt adhesive as claimed in claim 1, **characterized in that** the poly-α-olefin mixture is substantially amorphous and the poly-α-olefin has the following monomer composition:
- 3 to 75% by weight of an α-olefin containing 4 to 10 carbon atoms,
- 25 to 95% by weight of propene and
- 0 to 20% by weight of ethene.

4. A hotmelt adhesive as claimed in claim 1, **characterized in that** the poly-α-olefin mixture has a melt viscosity at 190°C of 2,000 to 15,000 mPas, as measured to ASTM D 3236-88.

5. A hotmelt adhesive as claimed in claim 1, **characterized in that** the poly-α-olefin has a density of <0.90 g/cm³, a needle penetration to DIN 52010 of 0.8 to 40 mm, a molecular weight as determined by gel permeation chromatography of at most 100,000 (weight average) or at least 4,000 (number average), the difference between the weight average and the number average molecular weight being no more than six times the number average.

6. A hotmelt adhesive as claimed in claim 1, **characterized in that** the poly-α-olefin mixture contains at least one poly-α-olefin with a melt viscosity of 40,000 to 60,000 and at least one poly-α-olefin with a melt viscosity of 3,000 to 10,000 Pas at 190°C, as measured to ASTM D 3236-88.

7. A hotmelt adhesive as claimed in claim 1, **characterized in that** the oil is a medicinal white oil.

8. A hotmelt adhesive as claimed in claim 1, **characterized in that** the hydrocarbon resin is a hydrocarbon resin containing 5 to 9 carbon atoms.

9. A hotmelt adhesive as claimed in claim 1, **characterized in that** the additive is at least one substance of the following group: heat and light stabilizer, optical brightener, antistatic agent, lubricant and antiblocking agent, nucleating agent, dye, pigment or flame retardant.

10. A hotmelt adhesive as claimed in claim 1, **characterized in that** components B and C together make up at least 30% by weight, preferably at least 35% by weight and more preferably at least 45% by weight of the sum of components A+B+C.

11. A hotmelt adhesive as claimed in claim 1, **characterized in that** components A, B and C are selected so that the viscosity at 100°C is in the range from 5 to 15 Pas ± 15, more particularly ± 10%, as a function of the shear rate of 2 to 250 [sec⁻¹].

12. A process for the production of the hotmelt adhesive claimed in at least one of claims 1 to 11, **characterized in that** the raw materials are mixed in an inert gas atmosphere and/or in a vacuum at temperatures of 150 to 200°C.

13. The use of the hotmelt adhesive claimed in at least one of claims 1 to 11 for structural bonding in sanitary products, more especially for bonding diapers, panty liners and sanitary napkins.

14. The use of the hotmelt adhesive claimed in at least one of claims 1 to 11 for bonding films, more particularly of polyolefins, and nonwovens, more particularly of polypropylene, the application temperature being between 120 and 180°C and preferably between 140 and 160°C, the coating weight being between 2 and 10 and preferably between 3 and 4 g/m² and the application rate preferably being between 50 and 400 m/min.

## Revendications

1. Colle fusible pulvérisable d'une viscosité à l'état fondu de 500 à 4 000 mPas à 150 °C, selon ASTM D 3236-88, possédant la composition suivante :
A) 30 à 70 % en poids d'un mélange de poly-α-oléfines d'un point de ramollissement (méthode de l'anneau et de la bille) entre 70 et 130 °C et d'une viscosité à l'état fondu à 190 °C entre 1 000 et 20 000 mPas selon ASTM D 3236-88,
B) 5 à 30 % en poids, au moins d'une huile fluide d'une viscosité de 20 à 300 mPas à 20 °C selon DIN 51 562,
C) 20 à 60 % en poids au moins d'une résine d'hydrocarbure présentant un intervalle de ramollissement de 70 à 140 °C selon ASTM E 28 et
D) le cas échéant, des additifs.

2. Colle fusible selon la revendication 1,
**caractérisée par**
sa viscosité qui se situe dans la plage de 700 à 1 900 mPas à 150 °C, mesurée selon ASTM 3236-88.

3. Colle fusible selon la revendication 1,
**caractérisée en ce que**
le mélange de poly-α-oléfines est largement amorphe et que la poly-α-oléfine présente la composition de monomères suivante :
- 3 à 75 % en poids d'une α-oléfine de 4 à 10 atomes de carbone,
- 25 à 95 % en poids de propène et
- 0 à 20 % en poids d'éthène.

4. Colle fusible selon la revendication 1,
**caractérisés en ce que**
le mélange de poly-α-oléfines présente une viscosité à l'état fondu à 190 °C entre 2 000 et 15 000 mPas, mesurée selon ASTM D 3236-88.

5. Colle fusible selon la revendication 1,
**caractérisée en ce que**
la poly-α-oléfine a une masse volumique inférieure à 0,90 g/cm³, une pénétration d'aiguille conformément à DIN 52010 entre 0,8 et 40 mm, un poids moléculaire déterminé par chromatographie avec perméation de gel de 100 000 au maximum (moyenne en poids) et d'au moins 4 000 (moyenne arithmétique), la différence entre la moyenne en poids et la moyenne arithmétique du poids moléculaire ne devant pas dépasser 6 fois la valeur de la moyenne arithmétique.

6. Colle fusible selon la revendication 1,
**caractérisée en ce que**
le mélange de poly-α-oléfines contient au moins une poly-α-oléfine d'une viscosité à l'état fondu se situant dans la plage de 40 000 à 60 000 et au moins une poly-α-oléfine d'une viscosité à l'état fondu se situant dans la plage de 3 000 à 10 000 mPas à 190 °C, valeurs mesurées selon la norme ASTM D 3236-88.

7. Colle fusible selon la revendication 1,
**caractérisée en ce que**
l'huile est une huile blanche, médicale.

8. Colle fusible selon la revendication 1,
**caractérisée en ce que**
la résine d'hydrocarbure est une résine d'hydrocarbure de 5 à 9 atomes de carbone.

9. Colle fusible selon la revendication 1,
**caractérisée en ce que**
l'additif est au moins une substance appartenant au groupe suivant : thermo- et photo-stabilisant, éclaircisseur optique, antistatique, agent lubrifiant et anti-blocage, agent de nucléation, colorant, pigment ou agent ignifugeant.

10. Colle fusible selon la revendication 1,
**caractérisée en ce que**
la somme du composé B et du composé C représente au moins 30, de préférence au moins 35 et en particulier au moins 45 % en poids, de la somme des composants A + B + C.

11. Colle fusible selon la revendication 1,
**caractérisée en ce que**
les composants A, B et C sont choisis de telle sorte que la viscosité à 100 °C en fonction de la vitesse de cisaillement de 0 à 250(sec⁻¹) se trouve dans la plage de 5 à 15 Pas +/- 15, en particulier +/- 10 %.

12. Fabrication de la colle fusible selon au moins l'une des revendications 1 à 11, par mélange des matières premières sous une atmosphère de gaz inerte et/ou sous vide, dans une plage de température de 150 à 200 °C.

13. Utilisation de la colle fusible selon au moins l'une des revendications 1 à 11 pour des collages de constructions dans le domaine de l'hygiène en particulier pour le collage de couches, garnitures de slips et serviettes hygiéniques.

14. Utilisation de la colle fusible selon au moins l'une des revendications 1 à 11, pour le collage de feuilles, en particulier en polyoléfines, et de voiles, en particulier en polypropylène, la température d'application se trouvant entre 120 et 180 °C, de préférence entre 140 et 160 °C, et le poids d'application variant entre 2 et 10, de préférence entre 3 et 4 g/m², et la vitesse d'application se trouvant de préférence entre 50 et 400 m/mn.
